Europäisches Patentamt

European Patent Office

Office européen des brevets

(19)

(11) Publication number: **0 1 1 7 737**
A2

(12) **EUROPEAN PATENT APPLICATION**

(21) Application number: 84301201.4

(22) Date of filing: 24.02.84

(51) Int. Cl.³: **B 29 C 25/00,** D 04 H 1/54

(30) Priority: 25.02.83 GB 8305314

(43) Date of publication of application: 05.09.84
Bulletin 84/36

(84) Designated Contracting States: **AT BE CH DE FR IT LI NL SE**

(71) Applicant: **RAYCHEM LIMITED, ROLLS HOUSE 7, Rolls Buildings Fetter Lane, London, EC4 1NL (GB)**

(72) Inventor: **Harris, Richard James, 58 Saffron Close Wootton Bassett, Swindon Wiltshire (GB)**
Inventor: **Pithouse, Kenneth Brian, 3 Pinehurst Cottage South Marston, Nr. Swindon Wiltshire (GB)**

(74) Representative: **Jay, Anthony William et al, Raychem Limited Intellectual Property Law Department Faraday Road, Dorcan Swindon Wiltshire (GB)**

(54) Curable fabric.

(57) Curable fabric comprising first and second curing reactants, at least one of which is in the form of a fabric member, the fabric having a web density greater than a specified limit in order to achieve desired level of cure.

This invention relates to a curable fabric which may, for example, be useful as a sealing layer between an electrical conductor and a dimensionally recoverable article such as a heat recoverable insulating sleeve to be recovered thereon.

A heat-recoverable article is an article the dimensional configuration of which may be made substantially to change when subjected to heat treatment.

Usually these articles recover, on heating, towards an original shape from which they have previously been deformed, but the term "heat-recoverable", as used herein, also includes an article which, on heating, adopts a new configuration, even if it has not been previously deformed. References hereinafter to "unresolved recovery" mean the proportion of dimensional recovery actually achieved to the maximum possible, i.e. complete recovery towards original dimensions.

In their most common form, such articles comprise a heat-shrinkable sleeve made from a polymeric material exhibiting the property of elastic or plastic memory. The original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat-unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above a transition temperature thereof, for example, the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat to raise the temperature above the transition temperature will cause the article to assume its original heat-stable shape.

Where the term "recovery temperature" in connection with heat-recoverable articles is used herein, it is intended to refer to the transition temperature above which the article recovers even if some small degree of recovery is exhibited at temperatures slightly below the transition temperature.

In other known articles, an elastomeric member such as an outer tubular member is held in a stretched state by a second member, such as in inner tubular member, which, upon heating weakens and thus allows the elastomeric member to recover.

Articles of this type have, in recent years, become widely used in a number of applications, for example for protecting objects such as electrical cables and cable splices or metal pipes from corrosion or other damage, for example damage caused by penetration of moisture. For this reason many heat-recoverable articles are provided with a coat of adhesive or sealant.

One problem that is associated with the provision of adhesives on heat-recoverable articles is that, because the heat required to melt or otherwise activate the adhesive is usually supplied by heating the external surface of the heat-recoverable article, the temperature to which the adhesive is heated will be considerably lower than that of the external surface of the article due to the relatively poor thermal conductivity of the materials from which the heat-shrinkable article is formed. Thus, for example, where the heat-shrinkable article is formed from a cross-linked polyethylene, the external surface of the article may be heated up to about 250°C in order to raise the adhesive temperature to only 100°C, and, in this case, no further heating of the article would be possible without damaging the article. Also, in many cases, the maximum temperature to which the adhesive can be raised is restricted by the type of substrate that is being covered. For example, where the substrate is a metal pipe, the thermal conductivity and size of the pipe cause it to act as a heat-sink and effectively limit the adhesive temperature and, where the substrate comprises an uncrosslinked polymer as is often the case with electrical cable jackets, the adhesive temperature often cannot be raised above about 100 to 120°C without damaging the cable jacket.

Whilst hot-melt adhesives or mastics can be used in a number of applications, the maximum temperature to which the article may be subjected after installation is usually limited to the melting or softening point of the adhesive.

Curable adhesives for this purpose in the form of fabrics are known from U.S. Patent No. 4271329, but such known fabrics tend not to produce a satisfactory level of cure when used as described in that patent under a heat-recoverable sleeve, especially when curing components of only moderate reactivity are used to suit particular requirements.

The present invention provides a curable fabric comprising at least first and second components of an curable composition which can be cured by reaction together of the first and second components, at least the first component being in the form of fabric members incorporated in the fabric and the fabric web density being at least 250 g/m$^2$.

The invention also provides a curable fabric comprising at least first and second components of an curable composition which can be cured by reaction together of the first and second components, at least the first component being in the form of fabric members incorporated in the fabric and the components having a reactivity such that more than 20% gel, preferably more than 30% gel, is produced when those components alone are heated together for 15 minutes at 150°C, the fabric web density being at least 100g/m$^2$, preferably at least 150g/m$^2$, more preferably at least 200 g/m$^2$; and provides a dimensionally recoverable article carrying on at least part of a surface thereof a fabric according to this invention.

It has unexpectedly been found that improved levels of cure are obtained when a heat-recoverable article is recovered over a fabric according to this invention, especially when, as is preferred, both of the said first and second components are fabric members incorporated (preferably woven) in the fabric and/or the melting point of at least one (preferably both) of the said components is selected to be not more than 50C°, preferably not more than 10C°, above the recovery temperature of the article.

It will be understood that "curing" as used herein is not restricted to systems which form rigid chemical cross-links, provided that the components react together when suitably stimulated, e.g. by heating to produce a significant viscosity increase, an example being polyamide/EVA mixtures which produce such an increase by hydrogen bonding, as described in U.S. Patent 4018733.

References herein to "fabric members" are intended to include fibres, mono-filaments and yarns which may incorporate one or both of the curing components. Thus, for example, the curable fabric may be made of two kinds of fibre or yarn, each kind respectively providing one of the curing components; or the fabric may be made from a single bond of fibre of ilament which incorporates both components. The respective components may be provided in the form of continuous filaments, which may be suitable for use as such or may be incorporated into yarns containing one or both kinds of the individual component filaments. Alternatively, mono-filaments comprising both of the components, for example as described and claimed in our copending British Patent Application No....... (RK187), may be used, alone or in yarns. The components may also be provided in the form of short staple fibres containing one or both of the components which may be spun into yarns containing one or both of the individual components. Yarns, fibres and filaments of different kinds may be combined in the fabric if desired, for example by using spun yarns containing one of the components with continuous filament yarns containing the other of the components, or by using a yarn containing equal weight of both of the components with continuous filaments of one of the components where an excess of one of the components over the other is desired.

The curable components of the adhesive composition may be selected according to requirements from known curable systems, provided that at least one, preferably both, of the components can be formed into fibres or filaments suitable for use as the fabric members. Curable materials which are difficult in themselves to handke in the form of fibres or filaments may be prepared in suitable physical form by means of a support member such as a central strengthening strand or filament, e.g. a 0.1mm glass or polyester filament, onto which the curable material may be coated, e.g. by extrusion. Alternatively, brittle materials, e.g. epoxies, may advantageously be formed into two-component fabric members in which the other component is a flexible material, e.g. a polyamide, so that the resulting two-component fabric member can be machine woven or knitted, despite the difficulty or impossibility of machine processing fabric members formed of the brittle material alone.

Preferably the components are such that, if they are brought together into intimate contact, for example by dissolving them in a common solvent, they will react together even at room temperature to form a cured product so that curing of the adhesive composition on the article during storage is prevented substantially solely by the physical separation of the components.

In a number of cases it has been found that when a heat-recoverable article is recovered onto a substrate with a fabric according to the invention between the article and the substrate, the adhesive will cure sooner than if it is heated on its own to the same temperature, or will cure at a significantly lower temperature than it will when heated on its own. The fabric may be carried by the recoverable article or may be applied separately to the substrate then overlaid with the recoverable article. Thus it has been found that it is possible, according to the invention, to provide an adhesive coated heat-recoverable article in which the adhesive can be cured by heating the article to its recovery temperature for periods in the range of the recovery time of the article, but which will also have good storage life.

0117737

The rate of curing of curable adhesives at elevated temperatures is linked to their rate of curing at ambient temperatures, and hence their storage life, by the Arrhenius equation which effectively imposes a limit on the rate of cure of an adhesive at the usual recovery temperature of a heat-shrinkable article (about 100 to 120°C) for any given storage life at ambient temperatures or _vice_ _versa_. It can be shown from the Arrhenius equation that any curable adhesive that cures sufficiently rapidly at the recovery temperature of the article should suffer from a poor storage life or that an adhesive that does have a long storage life should not cure sufficiently rapidly at the recovery temperature of the article. However, according to the invention it is possible to overcome this problem by virtue of the synergistic increase in the rate of curing of certain adhesives when used in conjunction with a recoverable article.

This synergistic effect is most pronounced when the fusion temperature of the components is in the region of the recovery temperature of the article or the temperature to which the adhesive is heated when the article is recovered. Preferably the fusion temperature is not more than 50°, especially not more than 30° and most especially not more than 10°C above the recovery temperature of the article. Also preferably, not more than one, and especially none, of the components has a fusion temperature of less than 50°C. Each of the components preferably has a fusion temperature in the range of 70 to 120°C and most preferably from 70 to 100°C, and, instead or in addition, each has a fusion temperature that differs from the fusion temperature of the or each other reactive component by not more than 30°C.

In most instances the components will melt or soften at their fusion temperature although the term is intended to include sublimation of one or more components if this occurs.

In many cases the reactive components will soften and flow or otherwise fuse over a temperature range and the softening characteristics of the components may be observed by thermomechanical analysis (TMA) as described in "Thermal Analysis" by T. Daniels published by Kogan Page 1973. Accordingly, the fusion temperature or the melting point of the reactive components of the adhesive is defined herein as being the temperature at which the TMA probe has penetrated to 60% of the total thickness of the material, usually referred to as $T_{60}$. The TMA data described herein were obtained using a 6.35mm diameter flat profile probe loaded with a 50 gramme weight and by increasing the temperature of the material at a rate of 10°C per minute. Preferably the temperature at which reactive components of the adhesive initially become soft referred to as $T_i$ on the TMA plot) is not more than 30°C below and especially not more than 25°C below the melting point ($T_{60}$) of the components so that the difference between the maximum storage temperature and the minimum curing temperature can be reduced as far as possible.

Another synergistic effect that may be shown by the articles according to the invention, either instead of or in addition to the increase in rate of cure of the adhesive, is an increase in the level of curing of the adhesive as compared with the adhesive on its own.

The increase in level of curing leads to improved properties such as solvent resistance and improved high temperature properties such as high temperature shear strength.

The level of cure of the adhesive may be measured in a number of ways. For example, it may be measured as an increase in the $T_{60}$ (as defined above) or, more preferably the $T_{80}$ of the adhesive, where $T_{80}$ is defined as the temperature at which the TMA probe has penetrated to 80% of the total thickness of the adhesive. In some cases the composition will cure sufficiently to prevent the probe penetrating it by 80% in which case the total depth of penetration is a better measure of cure. Another measure of the level of cure of the adhesive is its gel content which is measured by weighing a quantity of the adhesive into an extraction thimble, refluxing the adhesive for 5 to 8 hours with a solvent (e.g. 1,2-dichloroethane or tetrahydrofuran), drying the thimble in an oven for 24 hours to evaporate the solvent and, after leaving the dried thimble in the atmosphere for a further 24 hours reweighing the thimble. The gel content is then defined as the final weight of the adhesive (which is insoluble) expressed as a percentage of the initial weight of the adhesive.

The adhesive fabric cures, as stated above, by reaction of a plurality of mutually reactive components. The phrase "mutually reactive components" is defined herein as meaning components which, when mixed together in dry particulate form, will react together at the fusion temperature thereof or at least at the highest fusion temperature thereof to form a composition having a $T_{80}$ value that is at least 20 C°, preferably at least 30 C° and especially at least 40 C° above the initial fusion temperature of the blend. Preferably the composition will exhibit a gel content of at least 5%, more preferably at least 10%, especially at least 20%.

Thus, another aspect of the invention provides a method of enclosing at least part of a substrate, which comprises:

(a) positioning thereon a dimensionally-recoverable article such that curable fabric is disposed between the article and substrate to provide a fabric web density therebetween of at least 250 g/m$^2$, (or 100g/m$^2$ with the more reactive systems hereinbefore specified) the fabric comprising at least first and second components of an adhesive composition which can be cured by reaction together of the first and second components and at least the first component, preferably both the first and the second components, being in the form of a fabric member incorporated in the fabric; and

(b) recovering the article about the substrate and heating the fabric to fuse the said components, thus curing the fabric.

There is essentially no limit on the size of the reactive fabric members in that the fabric can still show a synergistic increase in rate and/or level of cure even with very large fabric members, although

0117737

the absolute value of the cure rate may tend to decrease with large fabric members. The thickness of the fabric members does, however, affect the maximum fabric web density which can be achieved with a single woven layer of the fabric and it may therefore be necessary to use more than one such layer of the fabric to achieve the required minimum of the present invention if very thin fabric members are used. Preferably the woven fabric members will have a diameter of at least 0.2mm, for example 0.25 to 0.3mm, and more preferably at least 0.5mm, for example 0.75 to 0.8mm. It is to be understood that these references to diameter do not limit the fabric members to substantially circular cross-section, other cross-sections such as square, triangular, oval, hexagonal or indeterminate, or flat strips, being perfectly acceptable provided they can be adequately incorporated into the fabric.

The adhesive fabric may, if desired, consist solely of the reactive components although it is preferred for it to include one or more inert components. The inert components may be present in the reactive fabric components, or may be mixed with them as a separate phase or both. For example, the adhesive may comprise a fabric member of curable resin such as an epoxy resin, preferably one based on bisphenol A or on epoxy novolak resin, as one component and a curing agent such as an amine, carboxylic acid, phenolic resin or isocyanate curing agent as the other. The curing agent may itself be a fabric member, for example it may be a fibre of polyamide having free amino groups or a carboxylated polymer such as an ethylene/acid terpolymer, in which case it need not contain any inert component. If the curing agent is not polymeric, for example an organic peroxide or other free radical initiator, it may be desirable for it to be blended with a polymeric material, e.g. a polyester or a reactive or unreactive polyamide before being formed into a fabric member. The curable resin may, instead, comprise a polyamide having free amine groups, in which case the curing agent preferably comprises a material having free or blocked isocyanate functional groups, e.g. a cresyl blocked isocyanate.

The polyamides that are most suitable for forming fabric members to act as one of the components are those that are conventionally used as hot-melt adhesives. These polyamides are usually characterized by the fact that their amide linkages are separated by an average of at least fifteen carbon atoms and have amorphous structures in contrast with the more hightly crystalline, fibre forming polyamides such as nylon 6 or nylon 6.6. The polyamides preferably have an amine number of at least 1, preferably at least 5.

Chemical curing accelerators may also be present in the adhesive, either blended with one of the reactive fabric members or as separate fabric members or particles, provided that they do not unacceptably increase the rate of cure at storage temperatures, thus unacceptably decreasing the storage life of the fabric.

0117737

Examples of accelerators include dimethylaminopyridine, tris (dimethylaminomethyl) phenol, tin octoate, imidazole or imidazole derivatives such as salts, substituted imidazoles or metal complexes thereof.

A number of inert components may be incorporated in the compositions as long as they do not adversely affect the formation of the required fabric members, and preferably do not affect the increase in rate or level of cure of the adhesive composition. Also it is preferred that they do not adversely affect the storage life of the adhesive.

Inert components that may be incorporated in the adhesive composition include plasticisers such as phthalates or rosin esters, thermoplastic or thermosetting polymers, cured or uncured rubbers, inorganic materials to modify the properties of the uncured or cured adhesive such as reinforcing fillers, reinforcing fibres or microspheres, or tackifiers and the like. The other components, whether organic or inorganic, may be in any appropriate physical form, for example they may be in the form of powder, flake or fibres, and are preferably present in an amount of from 5 to 50 percent by weight based on the total weight of the composition. In a preferred aspect of the invention the adhesive composition contains one or more other components having a softening temperature range (from the initial softening temperature to $T_{60}$) that is greater than that of the reactive components so that the softening temperature range of the adhesive composition as a whole is greater than that of the reactive components,

0117737

preferably by at least 5°C. This has the advantage that, whilst the adhesive will cure when heated to only a relatively low temperature above the maximum storage temperature, it will possess cohesive and adhesive strength over a significantly greater temperature range. Alternatively, in some cases where the reactive components have a large softening temperature range it may be desirable to reduce the softening temperature range of the adhesive composition by incorporation of the appropriate components for example tackifier resins such as hydrogenated rosin esters and terpene phenols or polar waxes such as polyamide and polyester waxes.

As examples of other components that may be incorporated in the adhesive compositions subject to satisfactory formation of the fabric members, there may be mentioned tacky materials such as pressure sensitive adhesives or mastics, or thermoplastic materials. The components are preferably, although not necessarily, fluid at temperatures below the melting point of the reactive components, but if they are not they should be such as to allow the reactive components to mix together at the recovery temperature of the article.

The fabric according to the invention may be carried on recoverable articles in a number of configurations depending on the particular use. The articles may be in the form of a tube that has been extruded and expanded radially to render it heat-recoverable, the tube being either in continuous lengths or discrete pieces and carrying on its internal surface the fabric adhesive compositions. Alternatively, the articles may be in the form of a sheet or tape that can be wrapped or wound around an object. More complex shapes, commonly referred to as boots, transitions, udders or caps, may be formed by moulding the articles in the desired configuration and then expanding them or by the methods described in our U.K. Published Patent Applications Nos. 2083403A and 2083859A. The fabric of the present invention is also suitable for the use on wrap-around devices. So called wrap-around devices are employed for sealing, insulating or otherwise protecting a substrate where the use of a preformed tubular article such as a sleeve is not possible or convenient e.g. in the case where the end of an elongate substrate is not accessible. In general, such wrap-around articles comprise at least a portion thereof which is adapted to be wrapped around a substrate to be covered and secured in tubular form by closure means. Thereafter, the wrap-around closure may be heat-recovered tightly onto the substrate by application of heat. Examples of wrap-around devices are known and one form of wrap-around device in which the curable fabric may be especially useful is that described in our U.K. Published Patent Application No. 2076694A, which comprises a layer of sealant that may be peeled away at any desired point to expose an underlying layer of a closure adhesive. The fabric of the present invention can be well adapted to such a peeling operation.

In hollow articles, either moulded as such or formed by wrapping, the fabric adhesive may be advantageously positioned as a ring on the inner surface at

or near an aperture in the article to seal the aperture to a substrate about which the article is to be recovered in use.

Another preferred article which may carry the fabric according to the invention is in the form of a continuous tape or sheet, one surface of which carries the fabric. Such an article may be wound helically around a substrate for example a metal pipe which is preferably pre-heated, and the wound portions of the tape or sheet may be heated to recover the tape or sheet and cure the fabric adhesive. Often it is desired to operate further on the pipe shortly after the protective article has been recovered thereon, for example to bury it in a pre-dug trench and, because of the rapid cure of the adhesive composition, it is possible to perform such operations only a few minutes after the tape or sheet according to the invention has been recovered thereon.

The curable fabric may be attached to the heat-recoverable article in a number of ways depending on the type of article and fabric. For example, where the article has an open, generally uniform configuration, it may be provided with tacky material for example pressure sensitive adhesive e.g. by spraying or in the form of a tape, and the curable fabric may be applied thereto by application of pressure, pressures in the order of 0.8 MPa (120 p.s.i.) and temperatures of about 15 to 30°C having been found suitable in practice. Other methods such as welding or sewing may be used to attached the fabric if desired.

In another method of applying the fabric, the fabric members are mixed or coated with other components which preferably comprise or include a pressure-sensitive adhesive or a mastic and the whole composition is pressed onto the heat-recoverable article, the temperatures and pressures used preferably being the same as those mentioned above.

The fabric can, in the broadest aspect of the invention, be made solely of the curable fabric members as described above or can contain other fabric members in addition to the curable members. The fabric can be knitted, woven, non-woven, braided, or the like. In non-woven fabrics, the aforementioned improvement in curing achieved when fibres of the reactive components are spun separately then blended or layered to form the fabric. In a preferred embodiment the fabric is a woven fabric. The woven fabric can contain only curable members or it can contain the curable members together with non-curable fibres or filaments. For example, the fabric can contain curable fibres in one direction and non-curable strength fibres in the other. This produces a curable fabric which is especially strong in one direction. The fabric can be woven in a pattern, for example, twill, satin, sateen, Leno, plain, hop sack, sack, matt and various weave combinations in single or multiple ply weaves e.g. 2 - or 3 - ply weaves. The ratio of the reactive components is preferably stoichiometric 1:1, but may vary within the range from 1:9 to 9:1 to suit particular requirements of materials and level of cure. The fabric may alternatively be knitted if desired, either by warp knitting or weft knitting.

The adhesive components respectively may be arranged one on the weft and one in the warp, or various mixtures of components in the weft and/or warp may be used. According to yet another aspect, the fabrics of this invention may comprise three components of an adhesive composition that is novel per se comprising:

(a)  a thermoplastic polyamide having reactive amine groups;

(b)  a thermoplastic copolymer of an alkene, preferably ethylene, with an ethylenically unsaturated ester of an alkanol and a carboxylic acid, the ester having up to 6 carbon atoms, and optionally one or more acidic comonomers; and

(c) a thermoplastic epoxy resin.

Components (a) and (b) are preferably present in a ratio of from 35:65 to 75:25, preferably from 35:65 to 65:35, more from 40:60 to 60:40 and especially from 45:55 to 55:45 by weight, and component (c) is preferably present in an amount of from 8 to 79 parts per hundred parts of (a) and (b) combined by weight. In this case each of components (a), (b) and (c) may react with the other two components when the composition is heated to above the melting points of the components, and at least one of the components, preferably all three, is or are in the form of fabric members incorporated in the fabric.

Component (b) preferably has an acid number of at least 1 and preferably also has an acid number of less than 100. The term "copolymer" as used herein in connection with component (b) is intended to include terpolymers and polymers containing four or more comonomers. The preferred comonomers are vinyl acetate and ethyl acrylate optionally with an unsaturated carboxylic acid e.g. acrylic acid. Examples of materials that may be used include those described in U.S. patent No. 4,018,733.

The epoxy used for component (c) may comprise any of a number of epoxies for example those based on novolak resins or on bisphenol A, and may have a wide range of epoxy values provided it remains thermoplastic. Any of the polyamides mentioned above will in general be suitable as component (a).

Preferably, each of the components (a), (b) and (c) has a melting or softening point ($T_{60}$) in the range of from 60 to 120°C, more preferably from 70 to 120°C and especially from 70 to 100°C.

The adhesive components used in the fabric according to the invention have a softening point that increases on application from the melting or softening points of the components, e.g. in the order of 90 to 95°C to a value of about 130 to 140°C or even higher and so combine low initial application temperatures with relatively high use temperatures. Furthermore, whilst the cured fabric exhibits relatively high bond strengths when subject to shear stresses it also exhibits surprisingly high bond strengths at high temperatures in the peel mode, e.g. in the order of 80 to 100 $N(25mm)^{-1}$ between polyethylene substrates in contrast with conventional epoxy adhesives which have extremely low peel strengths.

For some applications, it may be preferable to use a web density of 750 - 1500 $g/m^2$, more preferably 800 - 1200 $g/m^2$, in order to achieve a desired balance of cure to other properties such as void filling or adhesion.

The following Examples illustrate the use of woven fabrics according to the invention, all parts expressed therein being by weight. Weaving was carried out by standard techniques using extruded monofilaments of the reactive components, the number of monofilaments per unit length and width of the fabric, and the number of interlacings of the monofilaments per unit length and width being adjusted to produce the indicated fabric web densities. Curing and sleeve recovery were effected by placing smaples in an oven at 150°C for 15 minutes unless otherwise indicated, and level of cure was recorded in terms of percent gel content, comparing the fabric alone with samples on a round mandrel over which a heat-shrinkable polyethylene sleeve had been shrunk leaving (a) 50% unresolved recovery (b) virtually no unresolved recovery. The sleeve used in each case was cross-linked polyolefin of known kind, having a wall thickness (expanded state) of approximately. 0.3 mm.

EXAMPLE 1

FILAMENT DIAMETER 0.25 - 0.3 mm

FABRIC HAND BRAIDED

MATERIALS - EPOXY E1001* - EXTRUDED ONTO 0.1 MM GLASS
                                FILAMENT

          POLYAMIDE V940 ** - EXTRUDED

RATIO OF EPOXY FILAMENTS TO POLYAMIDE FILAMENTS: 50/50

\* EPIKOTE 1001 made by Shell, having an epoxy equivalent weight of 475.

\* VERSAMID 940 made by Cray Valley Products. Amine N. 1 - 7.

| CURE GEL CONTENT (%) | FABRIC 100 GMS/M$^2$ | FABRIC 200 GMS/M$^2$ | FABRIC 300 GMS/M$^2$ |
|---|---|---|---|
| FABRIC ALONE | 4.0 | 5.1 | 8.4 |
| UNDER SLEEVE (50% UNRE- SOLVED REC) | 11.0 | 13.6 | 17.3 |
| UNDER SLEEVE (0% UNRE- SOLVED REC) | 4.0 | 4.4 | 11.0 |

EXAMPLE 2

FILAMENT DIAMETER 0.7 - 0.75 mm
FABRIC HAND BRAIDED
MATERIALS AND RATIO AS FOR EXAMPLE 1.

| CURE GEL CONTENT (%) | FABRIC 200 GMS/M$^2$ | FABRIC 300 GMS/M$^2$ | FABRIC 400 GMS/M$^2$ | FABRIC 500 GMS/M$^2$ |
|---|---|---|---|---|
| FABRIC ALONE | 5.5 | 3.7 | 5.7 | 17.7 |
| UNDER SLEEVE (50% UNRE- SOLVED REC) | 3.5 | 13.6 | 12.0 | 39.3 |
| UNDER SLEEVE (0% UNRE- SOLVED REC) | 5.2 | 14.0 | 12.0 | 36.8 |

\*Inventors to identify source and characteristics.

EXAMPLE 3

This example illustrates in duplicate the use of a more reactive curing system (as aforementioned) which demonstrates synergistic improvement in cure under a heat-shrink sleeve even at fabric web densities below $250g/m^2$. No significant difference is seen between samples in which the fabric is carried by the sleeve and those in which it is laid on the mandrel and overlaid by the sleeve.

FILAMENT DIAMENTER 0.6 - 0.7 mm

FILAMENT CONSTRUCTION: 0.1 mm POLYESTER REINFORCING CORE SEQUENTIALLY COATED WITH EPOXY E1001 (SEE EXAMPLE 1) THEN POLYAMIDE V1300* (AMINE NO. 10 - 20) RATIO OF EPOXY: POLYAMIDE = 25:75

FABRIC KNITTED TO WEB DENSITY 200 $g/m^2$

* Macromelt 6301 made by General Mills Henkel.

| CURE CONDITIONS/ GEL CONTENT | ORIGINAL | DUPLICATE |
|---|---|---|
| FABRIC ALONE | 31.1 | 30.1 |
| FABRIC ON MANDREL OVERLAID BY SLEEVE (50% UNRESOLVED) | 45.4 | 46.7 |
| FABRIC ON MANDREL OVERLAID BY SLEEVE (0% UNRESOLVED) | 51.0 | 66.0 |
| FABRIC ON SLEEVE (50% UNRESOLVED) | 42.3 | 49.4 |
| FABRIC ON SLEEVE (0% UNRESOLVED) | 56.5 | 54.3 |

0117737

EXAMPLE 4

This example demonstrates the surprising retention of curability in storage at 50°C (i.e. good "shelf life") of fabrics according to the present invention, and achieves this even when using a more reactive system (B) than that of Example 3.

A

| STORAGE TIME (MINS) X $10^4$ | 0 | 2 | 3 | 4 | 5 | 6 | 7 | 8 | 9 | 11 | 12 | 14 |
|---|---|---|---|---|---|---|---|---|---|---|---|---|
| % GEL | 3 | 0.1 | 0.2 | 4.0 | 6.4 | 2.6 | 4.6 | 3.4 | 4.2 | 0 | 0 | 5.3 |

FILAMENT CONSTRUCTION - REINFORCING CORE (GLASS) 0.1 mm
- EPOXY E1001  Ist coat (25 parts)
- POLYAMIDE V1300  2nd coat (75 parts)
- FILAMENT DIAMETER 0.50  mm
- FABRIC KNITTED TO 200 g/m$^2$

B

| STORAGE TIME (MINS) X $10^4$ | 0 | 1 | 2 | 3 | 4 | 5 | 6 |
|---|---|---|---|---|---|---|---|
| % GEL | | 7 | 12.1 | 0 | 0.6 | 0.4 | 0 | 0 |

FILAMENT CONSTRUCTION - REINFORCING CORE (GLASS) 0.1 mm
- EPOXY E1001 1st coat (25 parts)
- POLYAMIDE V871 *2nd coat (75 parts)
  (Amine No. 20 - 40)
- FILAMENT DIAMETER 0.50  mm
- FABRIC KNITTED TO 200 g/m$^2$

* Macromelt 6071 made by General Mills Henkel.

C

| STORAGE | | | | |
|---|---|---|---|---|
| TIME (MINS) X $10^4$ | 0 | 2 | 8 | 10 |
| % GEL | 2.5 | 3.6 | 3.0 | |

FILAMENT CONSTRUCTION – REINFORCING CORE (POLY-
ESTER) 0.1 mm

- EPOXY E1001 Ist coat (25 parts)
- POLYAMIDE V1300   2nd coat (75 parts)
- FILAMENT DIAMETER 0.85 - 0.95
- FABRIC 3/1 TWILL 1422 $gms/M^2$

D

| STORAGE | | | | |
|---|---|---|---|---|
| TIME (MINS) X $10^4$ | 0 | 3 | 8 | 10 |
| % GEL | 2.3 | 2.6 | 3.1 | |

FILAMENT CONSTRUCTION – REINFORCING CORE (POLY-
ESTER) 0.1 mm

- EPOXY E1001 Ist coat (25 parts)
- POLYAMIDE V1300   2nd coat (75 parts)
- FILAMENT DIAMETER 0.65 - 0.7 mm
- FABRIC 3/1 TWILL 1132 $gms/M^2$

EXAMPLE 5

Illustrates Storage life as in Example 4 but at 60°C using EPOXY Epikote 1004 (Shell) having an epoxy equvialent of 900 and polyamide V1300 as aforesaid.

| STORAGE TIME (MINS)$\times 10^4$ | 0 | 4 | 6 | 10 | 13 |
|---|---|---|---|---|---|
| % Gel | 0.5 | 0.8 | 0.6 | 0.6 | 1.7 |

EXAMPLE 6

SEPARATE FILAMENTS: GLASS CORE WITH E1001,or V871 (see previously) EQUAL NUMBERS OF FILAMENTS WOVEN TO GIVE

200 gms/$M^2$ Fabric web density

Cured @ 150°C

| FABRIC ALONE | 32% gel |
|---|---|
| UNDER SLEEVE (50% unresolved) | 48% gel |
| UNDER SLEEVE (0% unresolved) | 40% gel |

Cured @ 100°C

| FABRIC ALONE | 8.8% gel |
|---|---|
| UNDER SLEEVE (0% unresolved) | 24.6% gel |

This Example also demonstrates the advantageously synergistic cure effect when curing is effected at temperatures lower than 150°C.

Another useful form of the invention provides a non-woven fabric having at least first and second reactive components, at least one of which is in the form of fabric members, with a reinforcing support of polymeric material to enable the curable fabric to be handled without excessive precautions against disintegration. This embodiment of the invention is not limited to the ranges of fabric web density hereinbefore specified, although those ranges are preferred. Preferably, a binder is used to bind the non-woven curable fabric together, and it will be understood that the reinforcing support makes it possible to handle the fabric conveniently.

The preferred support is an open mesh or net of thermoplastic polymeric material which may be disposed in any convenient arrangement with the non-woven sheet, for example on one or both main exposed surfaces thereof. The mesh size may be varied according to the required degree of support and degree of penetration of the cured adhesive through the holes of the mesh.

The support may comprise material which is reactive with one or both of the fabric curing components, polyamides being preferred as support materials for epoxy systems.

An example of this form of the invention follows.

Example 7

A non-woven web of 50 parts by weight melt-spun polyamide fibres of diameter 50 to 100 microns and 50 parts by weight epoxy powder of average particle size 100 to 400 microns together with 15 parts by weight of polyethylene oxide binder was formed by wet laying the mixed ingrediants by known methods using water as a solvent for the binder (but not for the reactive components) and removing the water. The resulting web was laid between two open meshes of Nylon 6 having parallelogram-shaped mesh openings of approximately 3 millimetres side length 4.5 millimetres major diagonal length. The Nylon 6 filaments were about 0.3 millimetres wide. The meshes were fusion bonded together at their edges, preferably through the edges of the curable fabric, to secure the curable fabric between them.

CLAIMS:

1.      A curable fabric comprising at least first and second components of a curable composition which can be cured by reaction together of the first and second components, at least the first component being in the form of fabric members incorporated in the fabric and the fabric web density being at least 250 g/m$^2$.

2.      A curable fabric comprising at least first and second components of a curable composition which can be cured by reaction together of the first and second components, at least the first component being in the form of fabric members incorporated in the fabric and the components having a reactivity such that more than 20% gel is produced when the components alone are heated together for 15 minutes at 150°C and the fabric web density being at least 100 g/m$^2$.

3.      A fabric according to claim 2, wherein the reactivity is such that at least 30% gel is produced

4.      A fabric according to Claim 1 or 2, wherein both of the first and second components are in the form of fabric members incorporated in the fabric.

5.   A fabric according to any of the preceding claims, wherein the fabric web density is within the range from 250g/m$^2$ to 500 g/m$^2$.

6.   A fabric according to any of claims 1 to 4, wherein the fabric web density is within the range from $750g/m^2$ to 1500 $g/m^2$.

7.   A fabric according to any of the preceding claims, wherein at least some of the fabric members incorporate both of the said components.

8.   A fabric according to any of the preceding claims, wherein at least some of the fabric members incorporate a strengthening filament of material other than the said components.

9.      A fabric according to any of the preceding claims, wherein the adhesive composition comprises:
   (a)  a thermoplastic polyamide having reactive amine groups;
   (b)  a thermoplastic copolymer of an alkene with an ethylenically unsaturated ester of an alkanol and a carboxylic acid, the ester having up to 6 carbon atoms, and optionally one or more acidic comonomers; and
   (c)  a thermoplastic epoxy resin;
at least one of the components (a), (b) and (c) being in the form of fabric members incorporated in the fabric.

10.     A fabric according to Claim 9, wherein components (a) and (b) are present in a ratio of from 35:65 to 75:25 by weight and component (c) is present in an amount of from 8 to 79 parts per hundred parts of components (a) and (b) by weight.

0117737

11.   , A fabric according to any of the preceding claims, wherein one of the said components is a polyamide having an amine number of not more than 40.

12.   A fabric as claimed in any of the preceding claims, wherein one of the reactive components comprises an epoxy resin and the other reactive component comprises a thermoplastic polyamide resin having free amine groups.

13.   A fabric as claimed in any of the preceding claims, wherein each of the reactive components has a fusion temperature in the range of from 70 to 120°C.

14.   A fabric as claimed in any of the preceding claims, wherein each of the reactive components has a fusion temperature that differs from the fusion temperature of the or each other reactive component by not more than 30 C°.

15.   A fabric as claimed in any of the preceding claims, which fabric includes one or more non-reactive components, and has a softening temperature range which is greater than that of the reactive components.

16.   A dimensionally recoverable article carrying on at least part of a surface thereof a fabric as claimed in any one of the preceding claims.

17.   An article as claimed in Claim 17 which is dimensionally heat-recoverable.

18.    An article as claimed in Claim 17, wherein each of the reactive components has a fusion temperature that is not more than 50 C° above the recovery temperature of the article.

19.    A method of enclosing at least part of a substrate, which comprises:

(a) positioning thereon a dimensionally-recoverable article such that curable fabric is disposed between the article and substrate the fabric comprising at least first and second components of an adhesive composition which can be cured by reaction together of the first and second components and at least the first component being in the form of a fabric member incorporated in the fabric and the web density of the fabric between the article and the substrate being at least $250g/m^2$, or at least $100g/m^2$ when the components are sufficiently reactive to produce more than 20% gel when the components above are heated together for 15 minutes at 150°C; and

(b) recovering the article about the substrate and heating the fabric to fuse the said components, thus curing the fabric.

20.    A non-woven curable fabric comprising at least first and second components of a curable composition which can be cured by reaction together of the first and second components, at least the first components being in the form of a fabric member, the non-woven fabric being supported by a support member of polymeric material.

21.    A fabric according to claim 22, wherein the non-woven fabric includes a binder in addition to the first and second reactive components.

22.    A fabric according to claim 22 or 23, wherein the support member is an open mesh of polymeric material.

23.    A fabric according to claim 24, wherein the mesh is on one or both main surfaces of the fabric.